(19) Europäisches Patentamt
European Patent Office
Office européen des brevets

(11) Veröffentlichungsnummer: **0 252 003 B1**

(12) # EUROPÄISCHE PATENTSCHRIFT

(45) Veröffentlichungstag der Patentschrift: **21.08.91**

(51) Int. Cl.$^5$: **C07C 251/04**, C08K 5/32

(21) Anmeldenummer: **87810347.2**

(22) Anmeldetag: **18.06.87**

(54) **Substituierte Aminoxysuccinate und deren Verwendung als Stabilisatoren.**

(30) Priorität: **24.06.86 US 877912**

(43) Veröffentlichungstag der Anmeldung:
**07.01.88 Patentblatt 88/01**

(45) Bekanntmachung des Hinweises auf die Patenterteilung:
**21.08.91 Patentblatt 91/34**

(84) Benannte Vertragsstaaten:
**DE FR GB IT**

(56) Entgegenhaltungen:
**US-A- 3 163 677**
**US-A- 3 869 278**
**US-A- 4 666 962**

(73) Patentinhaber: **CIBA-GEIGY AG**
**Klybeckstrasse 141**
**CH-4002 Basel(CH)**

(72) Erfinder: **Ravichandran, Ramanathan**
**111 De Haven Drive, Apt. 125**
**Yonkers, N.Y. 10703(US)**
Erfinder: **Snead, Thomas E.**
**39 King Street**
**Dobbs Ferry, N.Y. 10522(US)**

**EP 0 252 003 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Aminoxysuccinate, deren Verwendung zum Stabilisieren von organischem Material und das mit deren Hilfe gegen oxidativen, thermischen und/oder aktinischen Abbau stabilisierte organische Material.

Organische Materialien, wie z.B. Kunststoffe und Harze, unterliegen thermischem, oxidativem und lichtinduziertem Abbau. In der Technik ist eine grosse Anzahl von Stabilisatoren für eine Vielzahl von Substraten bekannt. Die Wirksamkeit eines Stabilisators hängt unter anderem von der Art des Substrats, in welchem er eingesetzt wird, und vom jeweiligen Abbaumechanismus ab. Daher ist es im allgemeinen schwierig, für eine konkrete Anwendung den wirksamsten und ökonomischsten Stabilisator anzugeben.

So kann beispielsweise die Wirksamkeit eines Stabilisators, der die Flüchtigkeit einer Verbindung reduziert, darauf zurückgeführt werden, dass er einen Bindungsbruch der Substratmoleküle verhindert. Um eine geringe Versprödung oder die Erhaltung der Elastizität eines Polymeren oder eines Elastomeren zu gewährleisten, kann von einem Stabilisator verlange werden, dass er übermässige Vernetzungsreaktionen und/oder Kettenabbruch verhindert. Um die Vergilbung zu unterbinden, müssen Reaktionen, die zu neuen Chromophoren führen, verhindert werden. Weiterhin müssen Probleme der Verarbeitungsstabilität und der Substratverträglichkeit beachtet werden.

Verschiedene organische Hydroxylamine sind bekannt und einige sind im Handel erhältlich. Eine Anzahl von Patenten offenbaren substituierte Hydroxylamine als Antioxidantien für verschiedene Substrate, einschliesslich Polyolefine, Polyester und Polyurethane. Als repräsentative Patent seien die US-Patente 3 432 578, 3 644 278, 3 778 464, 3 408 422, 3 926 909, 4 316 996, 4 386 224 und 4 590 231 genannt, welche im wesentlichen N,N-Dialkyl-, N,N-Diaryl- und N,N-Diaralkylhydroxylamine und deren Wirksamkeit als Farbverbesserer beschreiben.

Gegenstand der Erfindung sind Verbindungen der Formel I,

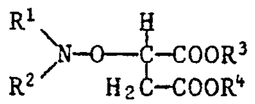

(I)

worin $R^1$ und $R^2$ unabhängig voneinander $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl bedeuten und $R^3$ und $R^4$ unabhängig voneinander Wasserstoff, ein Alkalimetall, $C_1$-$C_{36}$-Alkyl, Phenyl oder durch $C_1$-$C_{12}$-Alkyl substituiertes Phenyl sind.

Die Verbindungen der Formel I besitzen eine Vielzahl wertvoller Eigenschaften. So schützen diese Verbindungen eine Reihe von Substraten, wie z.B. Polyolefine, Elastomere und Schmiermittel gegen oxidativen und thermischen Abbau. Ferner sind sie sehr wirkungsvolle Farbverbesserer und Verarbeitungsstabilisatoren für Polyolefinzusammensetzungen, die Metallsalze von Fettsäuren und phenolische Antioxidantien enthalten können. Hauptsächlich können die Aminoxysuccinate dazu dienen, Verfärbungen zu vermindern, die auf die Gegenwart von phenolischen Antioxidantien und/oder auf die Verarbeitungsbedingungen zurückzuführen sind. Ferner schützen diese Verbindungen das organische Polymer direkt vor den Auswirkungen der Verarbeitungsbedingungen. Sie schützen auch solche Polyolefinzusammensetzungen, die gehinderte Amin-Lichtstabilisatoren oder Kombinationen von phenolischen Antioxidantien und Phosphiten enthalten, vor der Verfärbung.

$R^1$, $R^2$, $R^3$ und $R^4$ bedeuten als $C_1$-$C_{36}$-Alkyl zum Beispiel Methyl, Ethyl, n-Propyl, n-Butyl, tert-Butyl, n-Pentyl, n-Octyl, 2-Ethylhexyl, Decyl, Dodecyl oder Octadecyl. $C_1$-$C_{18}$-Alkyl, welches geradkettig oder verzweigt sein kann, ist bevorzugt.

$R^1$ und $R^2$ sind als $C_5$-$C_{12}$-Cycloalkyl beispielsweise Cyclopentyl, Cyclohexyl oder Cyclooctyl. Bevorzugt ist Cycloalkyl mit 5 bis 7 Kohlenstoffatomen, insbesondere Cyclopentyl und Cyclohexyl.

$R^1$ und $R^2$ können als unsubstituiertes oder durch $C_1$-$C_{36}$-Alkyl substituiertes $C_7$-$C_9$-Aralkyl insbesondere Phenylalkyl mit 7 bis 9 Kohlenstoffatomen bedeuten, wobei der Phenylring gegebenenfalls durch $C_1$-$C_{36}$-Alkyl, bevorzugt Methyl, substituiert sein kann. Beispiele sind Benzyl, α-Methylbenzyl und α,α-Dimethylbenzyl. Benzyl ist besonders bevorzugt.

$R^3$ und $R^4$ bedeuten als Alkalimetall bevorzugt Natrium oder Kalium.

$R^3$ und $R^4$ sind als Phenyl, welches durch $C_1$-$C_{12}$-Alkyl substituiert ist, zum Beispiel Methylphenyl, Dimethylphenyl, Trimethylphenyl oder tert-Butylphenyl.

Bevorzugt sind Verbindungen der Formel I, worin $R^1$ und $R^2$ unabhängig voneinander $C_1$-$C_{18}$-Alkyl, Cyclopentyl, Cyclohexyl, Benzyl, α-Methylbenzyl oder α,α-Dimethylbenzyl bedeuten.

Besonders bevorzugt sind Verbindungen der Formel I, worin $R^3$ und $R^4$ unabhängig voneinander $C_1$-$C_{18}$-Alkyl darstellen.

Bevorzugte Beispiele für Verbindungen der Formel I sind:
Di-n-butyl-2-(N,N-dibenzylaminoxy)succinat,
Di-2-ethylhexyl-2-(N,N-dibenzylaminoxy)succinat,
Di-2-ethylhexyl-2-(N,N,-diethylaminoxy)succinat,
Di-2-ethylhexyl-2-(N,N-dioctadecylaminoxy)succinat und
Di-n-octadecyl-2-(N,N-dioctadecylaminoxy)succinat.

Die Verbindungen der Formel I können in Analogie zu bekannten Verfahren hergestellt werden, beispielsweise durch Umsetzung eines Hydroxylamins der Formel II

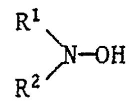
(II)

mit einem Maleat der Formel III,

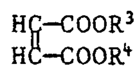
(III)

wobei $R^1$, $R^2$, $R^3$ und $R^4$ die oben angegebenen Bedeutungen haben. Die Umsetzung erfolgt zweckmässigerweise in einem Lösungsmittel. Bevorzugte Lösungsmittel sind heterocyclische Ether, wie z.B. Tetrahydrofuran, oder Glykolether, wie z.B. Diethylenglykoldimethylether. Die Reaktionstemperatur kann bei 60 °C bis 170 °C liegen. Bevorzugt findet die Umsetzung in Gegenwart eines Protonenakzeptors statt. Als geeignete Protonenakzeptoren seien genannt: Metallhydride, wie z.B. Natriumhydrid, Lithiumhydrid, Kalziumhydrid oder Kaliumhydrid, Alkali- und Erdalkalimetallhydroxide, wie z.B. Natriumhydroxid oder Kaliumhydroxid, oder Metallalkoxide, wie z.B. Na-methoxid, Na-ethoxid oder K-tert-butoxid.

Die Ausgangsverbindungen sind bekannt, teilweise im Handel erhältlich und können in Analogie zu bekannten Verfahren hergestellt werden.

Die Verbindungen der Formel I eignen sich zum Stabilisieren von organischem Material, wie beispielsweise Kunststoffe, Polymere und Harze, insbesondere:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-($\alpha$-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymere; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacryalt-Butadien-Terpolymere.

10. Polymere, die sich von ungesättigten Alkoholen und Aminen bzw. deren Acylderivaten oder Acetalen ableiten, die Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit termoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 5, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhyroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

28. Natürliche und synthetische organische Stoffe, die reine monomere Verbindungen oder Mischungen von solchen darstellen beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Bevorzugt werden die Verbindungen der Formel I in synthetischen Polymeren, insbesondere Polyolefinhomopolymeren oder -copolymeren eingesetzt.

Besonders bevorzugt werden die Verbindungen der Formel I in Polyolefinen, wie beispielsweise Polyethylen und Polypropylen, Polystyrol, einschliesslich schlagfestem Polystyrol, Acrylnitril-Butadien-Styrol-Harz (ABS), Styrol-Butadien-Kautschuk (SBR), Isopren als auch natürlichem Kautschuk, Polyester, einschliesslich Polyethylenterephthalat und Polybutadienterephthalat sowie deren Copolymeren, und in Schmierölen, die beispielsweise aus Mineralölen hergestellt werden, eingesetzt.

Im allgemeinen können die Verbindungen der Formel I in Konzentrationen von ~0,01 bis ~5 Gew.-%, bezogen auf die stabilisierte Zusammensetzung, eingesetzt werden; allerdings kann je nach Verwendung und Substrat die Stabilisatoremenge variieren. Bevorzugt verwendet man ~0,5 bis 2 Gew.-%, insbesondere 0,1 bis 1 Gew.-%.

Die Einarbeitung der Verbindungen der Formel I in das organische Material kann nach bekannten Methoden während jeder Verarbeitungsstufe vor der Formgebung erfolgen. Der Stabilisator kann beispielsweise in Pulverform dem organischem Material zugemischt werden oder eine Emulsion oder Suspension des Stabilisators kann mit einer Lösung, Suspension oder Emulsion des organischen Material vermischt werden.

Die stabilisierten Zusammensetzungen dieser Erfindung können gegebenenfalls auch herkömmliche Additive enthalten.

Beispielse für herkömmliche Additive sind:

1. <u>Antioxidantien</u>

1.1. <u>Alkylierte Monophenole</u>, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Dicyclopentyl-4-methylphenol, 2-(α-Methylcyclohexyl)-4,6-dimethylphenol, 2,6-Di-octadecyl-4-methylphenol, 2,4,6-Tri-cycylohexylphenol, 2,6-Di-tert.-butyl-4-methoxymethylphenol, 2,6-Dinonyl,-4-methylphenol.

1.2. <u>Alkylierte Hydrochinone</u>, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. <u>Hydroxylierte Thiodiphenylether</u>, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4. <u>Alkyliden-Bisphenole</u>, z.B. 2,2'-Methylen-bis-(6-tert.butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol),

2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Bis-(3-tert.butyl-4-hydroxy-5-methylphenyl)-dicyclopentadien, Bis-[2-(3'-tert.butyl-2'-hydroxy-5'-methyl-benzyl)-6-tert.butyl-4-methyl-phenyl]-terephthalat.

1.5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinesäureanilid, 4-Hydroxy-stearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

1.7.Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)-ethyl-isocyanurat, N,N'-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylgylcol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2 Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Dioctyloxy-5,5'-di-tert.butyl-oxanilid,2,2'-Di-

dodecyloxy-5,5'-di-tert.butyl-oxanilid, 2-Ethoxy-2'-ethyl-oxanilid, N,N'-Bis-(3-dimethylaminopropyl)-oxanilid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-disubstituierten Oxaniliden.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphospharspiro[5.5]undecan.

5. Peroxidzerstörende Verbindungen, wie z.B. Ester der $\beta$-Thio-dipropionsäure, beispielsweise der Lauryl-, Stearyl-, Myristyl- oder Tridecylester, Mercaptonbenzimidazol, das Zinksalz des 2-Mercaptobenzimidazols, Zink-dibutyl-dithiocarbamat, Dioctadecyldisulfid, Pentaerythrit-tetrakis-($\beta$-dodecylmercapto)-propionat.

6. Polyamidstabilisatoren, wie z.B, Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, HydrazinDerivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Die Zusammensetzungen dieser Erfindung enthalten bevorzugt ein Metallsalz einer höheren Fettsäure und/oder ein phenolisches Antioxidans als weitere Zusätze.

Die Verbindungen der Formel I eignen sich sowohl allein als auch in Kombination mit anderen Additiven als Stabilisatoren für eine Reihe von Substraten, insbesondere Polyolefin, die gegebenenfalls Alkalimetall-, Erdalkalimetall- oder Aluminiumsalze von höheren Fettsäuren (Beispiele sind die oben unter Punkt 7 aufgeführten Additive) und/oder gehinderte phenolische Antioxidantien enthalten können. Die Aminoxysuccinate der Formel I vermindern sehr wirksam Verfärbungen, die auf die Anwesenheit von Phenolen zurückzuführen sind. Solche phenolischen Antioxidantien sind beispielsweise: n-Octadecyl-3,5-di-tert-butyl-4-hydroxyhydrocinnamat, Neopentantetrayl-tetrakis(3,5-di-tert-butyl-4-hydroxyhydrocinnamat), Di-n-octadecyl-3,5-di-tert-butyl-4-hydroxybenzyl-phosphonat, 1,3,5-Tris(3,5-di-tert-butyl-4-hydroxybenzyl)isocyanurat, Thiodiethylen-bis(3,5-di-tert-butyl-4-hydroxyhydrocinnamat), 1,3,5-Trimethyl-2,4,6-tris(3,5-di-tert-butyl-4-hydroxybenzyl)benzol, 3,6-Dioxaoctamethylen-bis(3-methyl-5-tert-butyl-4-hydroxyhydrocinnamat), 2,6-Di-tert-butyl-p-cresol, 2,2'-Ethyliden-bis(4,6-di-tert-butylphenol), 1,3,5-Tris(2,6-dimethyl-4-tert-butyl-3-hydroxybenzyl)-isocyanurat, 1,1,3-Tris(2-methyl-4-hydroxy-5-tert-butylphenyl)butan, 1,3,5-Tris[2-(3,5-di-tert-butyl-4-hydroxyhydrocinnamoyloxy)ethyl]isocyanurat, 3,5-Bis(3,5-di-tert-butyl-4-hydroxybenzyl)mesitol, Hexamethylen-bis-(3,5-di-tert-butyl-4-hydroxyhydrocinnamat), 1-(3,5-Di-tert-butyl-4-hydroxyanilino)-3,5-bis(octylthio)-s-triazin, N,N'-Hexamethylen-bis(3,5-di-tert-butyl-4-hydroxyhydrocinnamamid), Kalzium-bis(ethyl-3,5-di-tert-butyl-4-hydroxybenzylphosphonat), Ethylen-bis[3,3-bis(3-tert-butyl-4-hydroxyphenyl)butyrat], Octyl-3,5-di-tert-butyl-4-hydroxybenzylmercaptoacetat, Bis(3,5-di-tert-butyl-4-hydroxyhydrocinnamoyl)hydrazid und N,N'-Bis[2-(3,5-di-tert-butyl-4-hydroxyhydrocinnamoyloxy)ethyl]oxamid, insbesondere Neopentantetrayl-tetrakis(3,5-di-tert-butyl-4-hydroxyhydrocinnamat), n-Octadecyl-3,5-di-tert-butyl-4-hydroxy-hydrocinnamat, 1,3,5-Trimethyl-2,4,6-tris(3,5-di-tert-butyl-4-hydroxybenzyl)benzol, 1,3,5-Tris(3,5-di-tert-butyl-4-hydroxybenzyl)isocyanurat, 2,6-Di-tert-butyl-p-cresol oder 2,2'-Ethyliden-bis(4,6-di-tert-butylphenol).

Die Verbindungen der Formel I verhindern auch Verfärbungen, die auf die Anwesenheit von gehinderten Amin-Lichtstabilisatoren zurückzuführen sind, wie beispielsweise:
Bis(1,2,2,6,6-pentamethyl-4-piperidyl)-2-n-butyl-2-(3,5-di-tert-butyl-4-hydroxybenzyl)malonat, Bis(2,2,6,6-tetramethyl-4-piperidyl)sebacat, Umsetzungsprodukt von Dimethylsuccinat mit 1-Hydroxyethyl-2-2,6,6-tetramethyl-4-hydroxypiperidin und Umsetzungsprodukt von 2,4-Dichloro-6-octylamino-s-triazin mit N,N'-Bis-(2,2,6,6-Tetramethyl-4-piperidyl)hexamethylendiamin.

Die folgenden Beispiele erläutern die Erfindung weiter. Alle Mengenangaben beziehen sich auf das Gewicht, soweit nicht anders angegeben.

Beispiel 1: Herstellung von Di-n-butyl-2-(N,N-dibenzylaminoxy)succinat (Verbindung 1)

Eine Lösung von 10,0 g N,N-Dibenzylhydroxylamin, 10,7 g Di-n-butylmaleat und 0,53 g Kalium-tert-butoxid in 100 ml Tetrahydrofuran wird 48 Stunden unter Rückfluss erhitzt. Anschliessend wird das Reaktionsgemisch unter vermindertem Druck konzentriert und der Rückstand mit einem Wasser/Methylenchlorid-Gemisch aufgenommen. Die organische Phase wird mit Wasser und einer Salzlösung gewaschen und über $MgSO_4$ getrocknet. Das Lösungsmittel wird bei vermindertem Druck abdestilliert. Nach chromatographischer Reinigung (Flüssigkeitschromatographie) liegt das Produkt als farbloses Oel vor.

Elementaranalyse:

Berechnet für $C_{26}H_{35}NO_5$: C 70,7%; H 8,0%; N 3,2%
Gefunden: C 70,5%; H 8,2%; N 3,0%.

Beispiel 2: Herstellung von Di-2-ethylhexyl-2-(N,N-dibenzylaminoxy)succinat (Verbindung 2)

Eine Lösung von 13,67 g N,N-Dibenzylhydroxylamin und 21,82 g Bis(2-ethylhexyl)maleat in 50 ml Tetrahydrofuran wird 48 Stunden unter Rückfluss erhitzt. Das Lösungsmittel wird bei verminderten Druck entfernt und der Rückstand wird chromatographisch gereinigt. Das Produkt liegt als klare, farblose Flüssigkeit vor.

Elementaranalyse:

Berechnet für $C_{34}H_{51}NO_5$: C 73,7%; H 9,3%; N 2,5%
Gefunden: C 72,6%; H 9,3%; N 2,2%.

Beispiel 3: Herstellung von Di-2-ethylhexyl-2-(N,N-diethylaminoxy)succinat (Verbindung 3)

Eine Lösung von 10,7 g Diethylhydroxylamin und 34,1 g Bis(2-ethylhexyl)maleat in 100 ml Diethylenglykol-dimethylether wird 32 Stunden unter Rückfluss erhitzt. Das Lösungsmittel wird bei vermindertem Druck entfernt und der Rückstand wird chromatographisch gereinigt (Flüssigkeitsschromatographie). Das Produkt liegt als klare, farblose Flüssigkeit vor.

Elementaranalyse:

Berechnet für $C_{24}H_{47}NO_5$: C 67,1%; H 11,0%; N 3,3%
Gefunden: C 67,9%; H 11,3%, N 2,9%.

Beispiel 4:

Wird das Verfahren gemäss Beispiel 1 wiederholt und Di-n-dodecylmaleat oder Di-n-octadecylmaleat an Stelle von Di-n-butylmaleat verwendet, so werden die entsprechenden Succinate isoliert.

Beispiel 5:

Wird das Verfahren gemäss Beispiel 1 wiederholt und Dioctadecylhydroxylamin und Di-n-octadecylmaleat oder Di-2-ethylhexylmaleat verwendet, so werden die entsprechenden Succinate isoliert.

Beispiel 6: Verarbeitungsstabilität von Polypropylen

Die Grundformulierung enthält 100 Teile unstabilisiertes Polypropylen (®Profax 6501, Himont) und 0,1 Teil Kalsiumstearat. Die unten angegebenen Stabilisatoren werden in Form einer Lösung dem Polypropylen zugemischt (Lösungsmittel: Methylenchlorid). Das Lösungsmittel wird im Vakuum entfernt. Die stabilisierte Harzformulierung wird bei 100 Umdrehungen pro Minute extrudiert.

Extrusionsbedingungen:

| | |
|---|---|
| Zylinder 1 | 232°C |
| Zylinder 2 | 246°C |
| Zylinder 3 | 260°C |
| Düse 1 | 260°C |
| Düse 2 | 260°C |
| Düse 3 | 260°C |

Nach der ersten, dritten und fünften Extrusion werden die HarzKügelchen unter Druck bei 193° C zu 3,2 mm dicken Folien verformt.

Der "Yellowness Index" der Proben wird gemäss ASTM D 1925-63 T bestimmt. Niedrige Werte bedeuten eine geringe Verfärbung.

Der Schmelzindex der Proben wird gemäss A$TM 1238-L bestimmt. Höhere Werte bedeuten eine geringere Molmasse und sind ein Hinweis dafür, dass das Polymer abgebaut ist.

Die Ergebnisse sind in den folgenden Tabellen aufgeführt.

| Stabilisator | Extrusionstemperatur 260°C "Yellowness Index" nach der 1. Extrusion | 3. Extrusion | 5. Extrusion |
|---|---|---|---|
| ohne | 1,5 | 2,2 | 2,9 |
| 0,1 % Antioxidans A | 6,9 | 8,2 | 9,6 |
| 0,1 % Antioxidans A plus 0,05 % Verbindung 2 | 2,3 | 5,0 | 8,1 |
| 0,1 % Antioxidans A plus 0,05 % Verbindung 3 | 2,4 | 4,6 | 5,7 |

| Stabilisator | "Schmelzindex" in g/10 min nach der 1. Extrusion | 5. Extrusion |
|---|---|---|
| ohne | 9,2 | 86,7 |
| 0,1 % Antioxidans A | 4,7 | 9,7 |
| 0,1 % Antioxidans A plus 0,05 % Verbindung 2 | 4,1 | 8,5 |
| 0,1 % Antioxidans A plus 0,05 % Verbindung 3 | 3,4 | 5,1 |

Antioxidans A:

Neopentantetrayl-tetrakis[3,5-di-tert-butyl-4-hydroxyhydrocinnamat]

## Patentansprüche

1. Verbindungen der Formel I,

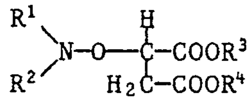

(I)

worin $R^1$ und $R^2$ unabhängig voneinander $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl bedeuten und $R^3$ und $R^4$ unabhängig voneinander Wasserstoff, ein Alkalimetall, $C_1$-$C_{36}$-Alkyl, Phenyl oder durch $C_1$-$C_{12}$-Alkyl substituiertes Phenyl sind.

2. Verbindungen gemäss Anspruch 1, worin $R^1$ und $R^2$ unabhängig voneinander $C_1$-$C_{18}$-Alkyl, Cyclopentyl, Cyclohexyl, Benzyl, $\alpha$-Methylbenzyl oder $\alpha,\alpha$-Dimethylbenzyl bedeuten.

3. Verbindungen gemäss Anspruch 1, worin $R^1$ und $R^2$ Benzyl sind.

4. Verbindungen gemäss Anspruch 1, worin $R^3$ und $R^4$ unabhängig voneinander $C_1$-$C_{18}$-Alkyl darstellen.

5. Die Verbindungen
Di-n-butyl-2-(N,N-dibenzylaminoxy)succinat,
Di-2-ethylhexyl-2-(N,N-dibenzylaminoxy)succinat,
Di-2-ethylhexyl-2-(N,N,-diethylaminoxy)succinat,
Di-2-ethylhexyl-2-(N,N-dioctadecylaminoxy)succinat und
Di-n-octadecyl-2-(N,N-dioctadecylaminoxy)succinat
gemäss Anspruch 1.

6. Zusammensetzung enthaltend organisches Material und mindestens eine Verbindung der Formel I gemäss Anspruch 1.

7. Zusammensetzung gemäss Anspruch 6, worin das organische Material ein synthetisches Polymer ist.

8. Zusammensetzung gemäss Anspruch 7, worin das synthetische Polymer ein Polyolefinhomopolymer oder -copolymer ist.

9. Zusammensetzung gemäss Anspruch 6, die zusätzlich ein Metallsalz einer höheren Fettsäure und/oder ein phenolisches Antioxidans enthält.

10. Zusammensetzung gemäss Anspruch 9, worin das phenolische Antioxidans Neopentantetrayl-tetrakis-(3,5-di-tert-butyl-4-hydroxy-hydrocinnamat), n-Octadecyl-3,5-di-tert-butyl-4-hydroxyhydrocinnamat, 1,3,5-Trimethyl-2,4,6-tris(3,5-di-tert-butyl-4-hydroxybenzyl)benzol, 1,3,5-Tris(3,5-di-tert-butyl-4-hydroxybenzyl)isocyanurat, 2,6-Di-tert-butyl-p-cresol oder 2,2'-Ethyliden-bis(4,6-di-tert-butylphenol) ist.

11. Verwendung von Verbindungen gemäss Anspruch 1 zum Stabilisieren von organischem Material gegen thermischen, oxidativen und/oder aktinischen Abbau.

## Claims

1. A compound of the formula I

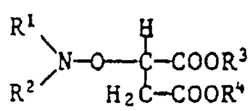

(I)

in which $R^1$ and $R^2$ are independtly of one another $C_1$-$C_{36}$alkyl, $C_5$-$C_{12}$cycloalkyl, $C_7$-$C_9$aralkyl, or $C_7$-$C_9$aralkyl which is substituted by $C_1$-$C_{36}$alkyl and $R^3$ and $R^4$ are independently of one another hydrogen, an alkali metal, $C_1$-$C_{36}$alkyl, phenyl or phenyl which is substituted by $C_1$-$C_{12}$alkyl.

2. A compound according to claim 1, in which $R^1$ and $R^2$ are independently of one another $C_1$-$C_{18}$alkyl, cyclopentyl, cyclohexyl, benzyl, $\alpha$-methylbenzyl or $\alpha,\alpha$-dimethylbenzyl.

3. A compound according to claim 1, in which $R^1$ and $R^2$ are benzyl.

4. A compound according to claim 1, in which $R^3$ and $R^4$ are independently of one another $C_1$-$C_{18}$alkyl.

5. The compounds di-n-butyl 2-(N,N-dibensylaminoxy)succinate,
di-2-ethylhexyl 2-(N,N-dibenzylaminoxy)succinate,
di-2-ethylhexyl 2-(N,N-diethylaminoxy)succinate,
di-2-ethylhexyl 2-(N,N-dioctadecylaminoxy)succinate and
di-n-octadecyl 2-(N,N-dioctadecylaminoxy)succinate
according to claim 1.

6. A composition comprising organic material and at least one compound of the formula I according to claim 1.

7. A composition according to claim 6, in which the organic material is a synthetic polymer.

8. A composition according to claim 7, in which the synthetic polymer is a polyolefin homopolymer or copolymer.

9. A composition according to claim 6, which also contains a metal salt of a higher fatty acid and/or a phenolic antioxidant.

10. A composition according to claim 9, in which the phenolic antioxidant is neopentanetetrayl tetrakis(3,5-di-tert-
butyl-4-hydroxyhydrocinnamate), n-octadecyl 3,5-di-tert-
butyl-4-hydroxyhydrocinnamate, l,3,5-trimethyl-2,4,6-tris(3,5-di-tert-
butyl-4-hydroxybenzyl)benzene, 1,3,5-tris(3,5-di-tert-
butyl-4-hydroxybenzyl) isocyanurate, 2,6-di-tert-butyl-p-cresol or
2,2' -ethylidene-bis(4,6-di-tert-butylphenol).

11. The use of compounds according to claim 1 for stabilising organic material against thermal, oxidative and/or actinic degradation.

**Revendications**

1. Les composés de formule I ci-dessous

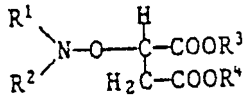

(I)

dans laquelle $R^1$ et $R^2$ désignent chacun, indépendamment l'un de l'autre, un alkyle en $C_1$-$C_{36}$, un cycloalkyle en $C_5$-$C_{12}$, un aralkyle en $C_7$-$C_9$ ou un aralkyle en $C_7$-$C_9$ avec comme substituant un alkyle en $C_1$-$C_{36}$, et $R^3$ et $R^4$ désignent chacun, indépendamment l'un de l'autre, l'hydrogène, un métal alcalin, un alkyle en $C_1$-$C_{36}$, un phényle ou un phényle substitué par un alkyle en $C_1$-$C_{12}$.

2. Composés selon la revendication 1 dans lesquels $R^1$ et $R^2$ sont chacun un alkyle en $C_1$-$C_{18}$ ou bien le groupe cyclopentyle, cyclohexyle, benzyle, $\alpha$-méthylbenzyle et $\alpha$, $\alpha$-diméthylbenzyle.

3. Composés selon la revendication 1 dans lesquels $R^1$ et $R^2$ sont chacun le groupe benzyle.

4. Composés selon la revendication 1 dans lesquelsR$^3$ et $R^4$ sont des alkyles en $C_1$-$C_{18}$.

5. Les composés suivants selon la revendication 1:
Di-n-butyl-2- (M, N-dibenzylaminoxy) succinate,
Di-2-éthylhexyl-2- (M,-dibenzylaminoxy) succinate,
Di-2-éthylhexyl-2- (N, N-diéthylaminoxy) succinate,
Di-2-éthylhexyl-2(N, N-dioctadécylaminoxy)succinate et
Di-n-octadécyl-2- (N, N-dioctadécylaminoxy) succinate.

6. Composition comprenant une matière organique avec un ou plusieurs composés de formule I selon la revendication 1.

7. Composition selon la revendication 6 dont la matière organique est une matière polymère synthétique.

8. Composition selon la revendication 7 dont le polymère synthétique est un homopolymère ou un copolymère d'oléfines.

9. Composition selon la revendication 6 qui contient en outre un sel de métal d'un acide gras supérieur et/su un anti-oxydant phénolique.

10. Composition selon la revendication 9 dans laquelle l'anti-oxydant phénolique est le :
néopentane-tétrayl-tétrakis (3, 5-di-tert-butyl-4-hydroxy-hydrocinnamate),
le n-octadécyl-3,5-di-tert-butyl-4-hydroxyhydrocinnamate,
le 1,3, 5-triméthyl-2,4, 6-tris- (3, 5-di-tert-butyl-4-hydroxy-benzyl)-benzène,
le 1,3,5-tris-(3,5-di-tert-butyl-4-hydroxybenzyl)-isocyanurate,
le 2,6-di-tert-butyl-p-crésol ou
le 2,2 '-éthylidène-bis- (4, 6-di-tert-butylphénol).

11. L'emploi des composés selon la revendication 1 pour stabiliser et protéger des matières orgnaniques contre les dégradations provoquées par la chaleur, par une oxydation et/ou par un rayonnement actinique.